(19) Europäisches Patentamt
European Patent Office
Office européen des brevets

(11) **EP 1 904 974 B1**

(12) **EUROPEAN PATENT SPECIFICATION**

(45) Date of publication and mention
of the grant of the patent:
**20.03.2013 Bulletin 2013/12**

(51) Int Cl.:
***G06T 7/20*** (2006.01)   ***H04N 7/26*** (2006.01)

(21) Application number: **06743560.2**

(22) Date of filing: **29.05.2006**

(86) International application number:
**PCT/FI2006/050218**

(87) International publication number:
**WO 2007/003694 (11.01.2007 Gazette 2007/02)**

(54) **APPARATUSES, COMPUTER PROGRAM PRODUCT, AND METHOD FOR DIGITAL IMAGE PROCESSING**

VORRICHTUNGEN, COMPUTERPROGRAMMPRODUKT UND VERFAHREN ZUR DIGITALEN BILDVERARBEITUNG

APPAREILS, PRODUIT DE PROGRAMME INFORMATIQUE ET PROCEDE POUR TRAITEMENT D'IMAGE NUMERIQUE

(84) Designated Contracting States:
**AT BE BG CH CY CZ DE DK EE ES FI FR GR HU IE IS IT LI LT LU LV MC NL PL PT RO SE SI SK TR**

(30) Priority: **05.07.2005 US 172972**

(43) Date of publication of application:
**02.04.2008 Bulletin 2008/14**

(73) Proprietor: **Google Inc.**
**Mountain View, CA 94043 (US)**

(72) Inventor: **TULKKI, Jarno**
**FI-90450 Kempele (FI)**

(74) Representative: **Pykälä, Timo Tapani**
**Kolster OY Ab**
**Elektroniikkatie 8**
**90590 Oulu (FI)**

(56) References cited:
EP-A2- 0 605 834     KR-A- 20030 049 537
US-A- 5 537 155     US-A- 5 557 341
US-A- 5 790 206     US-A- 5 926 212

- **Gunnar Thalin: "Deshaker - a video stabilizer for VirtualDub, Version 1.6 Released on 2003-11-24", , 13 April 2005 (2005-04-13), XP55019421, Retrieved from the Internet: URL: http://web.archive.org/web/20050413003 556/http://biphome.spray.se/gunnart/video/ deshaker.htm [retrieved on 2012-02-15]**
- **SHAFAIT F ET AL: "Low-complexity camera ego-motion estimation algorithm for real time applications", MULTITOPIC CONFERENCE, 2004. PROCEEDINGS OF INMIC 2004. 8TH INTERNATIO NAL LAHORE, PAKISTAN DEC. 24-26, 2004, PISCATAWAY, NJ, USA,IEEE, PISCATAWAY, NJ, USA, 24 December 2004 (2004-12-24), pages 131-136, XP010826728, DOI: 10.1109/INMIC.2004.1492859 ISBN: 978-0-7803-8680-8**
- **ERTUERK S: "DIGITAL IMAGE STABILIZATION WITH SUB-IMAGE PHASE CORRELATION BASED GLOBAL MOTION ESTIMATION", IEEE TRANSACTIONS ON CONSUMER ELECTRONICS, IEEE SERVICE CENTER, NEW YORK, NY, US, vol. 49, no. 4, 1 November 2003 (2003-11-01), pages 1320-1325, XP001201282, ISSN: 0098-3063, DOI: 10.1109/TCE.2003.1261235**

## Description

### Field

The invention relates to a digital image processing apparatus, an arrangement for digital image processing, a computer program product for digital image processing, embodied on a distribution medium, an integrated digital image processing circuit, and a method for defining motion between digital images.

### Background

Undesired movement of the camera used for filming, caused by shaking of the cameraman's hands, for instance, is a big and widely studied problem in video research area. Various mechanical and electronic solutions have been designed for stabilizing video images, since a stable video looks much more pleasant than a video that sways, shakes and wanders around. Also, in video coding, a stable video stream requires much less bit rate or disc space, not to mention coding efficiency or speed.

Great results have been achieved with mechanical solutions, such as acceleration sensors, but because of their unacceptable prize and need for space, they are unsuitable for many video filming devices, like mobile phones. Digital video stabilization, especially real-time video stabilization, which is needed for the above-mentioned mobile phones, for instance, has been a goal beyond reach for a long time.

Digital video stabilization concerns solving two problems:

1) How to define a single global motion vector between two consecutive video frames? So far, there has not been an unambiguous solution to this problem. One can always calculate a best local motion vector for every block of moving image, but the calculation of a global motion vector still remains. Concerning all the possible situations, it is clear that there is no algorithm that can perfectly define the global motion vector from the local ones in every case. In any case, this is a widely used solution with the great disadvantage of heavy calculation caused by the motion estimation. For a cif-sized image, a motion estimation with 16x16 blocks and a $\pm 16$ search area would require (16x16x33x33x369) about 100 million operations!

The best solution would probably be not to divide the image into blocks, but to estimate one vector for the whole image, calculating for instance about 1089 pixel differences for one single pixel in a search area of $\pm 16$. Again, for a cif-sized image, it would be about 80 million operations.

Attempts have been made to reduce the heavy calculation of motion estimation by decreasing the amount of used blocks in a motion estimation phase by detecting strong details or features from a single image and processing the motion estimation only for them. However, it is then inevitable that this decreases the reliability of the algorithm while feature detection increases the calculations.

2) How to stabilize the video with an offered global motion vector? Basically, there are three different solutions to this problem: (1) canceling the motion by moving the next image frame to a direction opposite to the global motion vector; (2) filtering the motion with Kalman filtering or FIR-filtering, for example, and canceling the motion after that; (3) zooming the image to achieve the motion canceling effect with the global motion vector, as described in US 5,317,685, for instance. The first two solutions require a larger image within which the stabilized image moves. The first solution suffers from discontinuations when the inner image achieves the edge of the outer image, and the second solution requires more calculation because of the filtering and image stuffing when the inner image exceeds the edge of the outer one. Furthermore, the second solution leads to a stuffing problem: how the stuffing should be done without breaking the image? The third solution is simply annoying because of the zooming effect and besides, it requires even more calculation. The first solution is described in more detail later on.

US 5,926,212 describes a first digital image and a second digital image each having at least one block. A camera shake motion vector is detected based on difference values between the blocks of the two images. A motion compensation is used on the image data to correct a camera shake detected from the camera shake motion vector.

Another publication, Gunnar Thalin: Deshaker - a video stabilizer for VirtualDub, Version 1.6, Released 24.11.2003, describes a video stabilizer to eliminate camera shakiness and make panning, rotation and zooming smoother. It further describes using blocks of pixels in two images and finding a shift (motion vector) that makes the blocks match. The shift finding starts from scale-reduced images and scales up in each iteration until the full scale is reached. An optimal camera motion is then calculated from the shifts.

### Brief description of the invention

The present invention seeks to provide an improved digital image processing apparatus, an improved arrangement for digital image processing, an improved computer program product for digital image processing, embodied on a distribution medium, an improved integrated digital image processing circuit, and an improved method for defining motion between digital images.

According to an aspect of the invention, there is provided a digital image processing apparatus, comprising: an input interface to obtain a first digital image and a second digital image; and a processing unit coupled with the input interface to define at least one block in the first digital image, to define for each block a search area in the second digital image, the search area being larger than the block, to map the block and its search area to an equal size, to calculate pixelwise errors between each block and its search area that are mapped to an equal size, to collect the errors into a motion register, and to define a motion between the first digital image and the second digital image by utilizing the motion register.

According to another aspect of the invention, there is provided an arrangement for digital image processing, comprising: means for obtaining a first digital image and a second digital image; means for defining at least one block in the first digital image; means for defining for each block a search area in the second digital image, the search area being larger than the block; means for mapping the block and its search area to an equal size; means for calculating pixelwise errors between each block and its search area that are mapped to an equal size; means for collecting the errors into a motion register; and means for defining a motion between the first digital image and the second digital image by utilizing the motion register.

According to another aspect of the invention, there is provided a computer program product for digital image processing, embodied on a distribution medium and comprising: an input module to obtain a first digital image and a second digital image; and a computing module coupled with the input module to define at least one block in the first digital image, to define for each block a search area in the second digital image, the search area being larger than the block, to map the block and its search area to an equal size, to calculate pixelwise errors between each block and its search area that are mapped to an equal size, to collect the errors into a motion register, and to define a motion between the first digital image and the second digital image by utilizing the motion register.

According to another aspect of the invention, there is provided an integrated digital image processing circuit, comprising: an input block to obtain a first digital image and a second digital image; and a processing block coupled with the input block to define at least one block in the first digital image, to define for each block a search area in the second digital image, the search area being larger than the block, to map the block and its search area to an equal size, to calculate pixelwise errors between each block and its search area that are mapped to an equal size, to collect the errors into a motion register, and to define a motion between the first digital image and the second digital image by utilizing the motion register.

According to another aspect of the invention, there is provided a method for defining motion between digital images, comprising: obtaining a first digital image and a second digital image; defining at least one block in the first digital image; defining for each block a search area in the second digital image, the search area being larger than the block; mapping the block and its search area to an equal size; calculating pixelwise errors between each block and its search area that are mapped to an equal size; collecting the errors into a motion register; and defining a motion between the first digital image and the second digital image by utilizing the motion register.

The invention provides several advantages. It provides a reliable calculation method for global motion vector with less calculations and low memory needs: the invention is not dependent on the traditional and slow motion estimation, which requires heavy calculation. The invention also offers a fast and low-memory video stabilization solution when connected to a video encoding system. The invention also offers a solution for predictive motion estimation with the global motion vector, local motion vectors and a topographic map of motion. The predictive motion estimation is used for example in video codecs, where motion estimation searches need to be minimized by predicting the most probable motion vector, with which the search process is then started to provide a good reference block for a limited amount of searches. The invention also provides a global motion vector or a map of predictive vectors for a motion estimation phase of a video encoding system to efficiently find a motion vector for a single block.


**List of drawings**

In the following, the invention will be described in greater detail with reference to the embodiments and the accompanying drawings, in which

Figure 1A is an overview of the general motion definition method;
Figure 1B illustrates the method's theory in practice;
Figure 2 is a table illustrating the relation between a motion map and motion vectors;
Figure 3 is a block diagram illustrating the general motion definition method;
Figure 4 illustrates filming and image scenes in video stabilization;
Figures 5A and 5B illustrate how a moving camera affects the filming scene and image scene;

Figures 6A and 6B illustrate the compensation of a camera motion;
Figure 7 illustrates a digital image processing apparatus and also shows how it relates to a video source;
Figure 8 is an overview of a video encoder; and
Figure 9 illustrates the usage of a global motion vector in the motion estimation of an encoder.

## Description of embodiments

A source of inspiration was a map of Finland on the wall of the inventor's workroom. Realizing that there is one and only one point on the map that lies over the same spot that it represents, the inventor created the following general motion vector calculation method.

This method, unlike the others, is not related to a prior art motion estimation algorithm at all, but introduces a totally new and different approach for global motion vector calculation. Based on the above-mentioned interesting fact about the maps, the method utilizes a pair of "maps" taken from consecutive images of a video sequence, for instance: a "map" of a search area and a "map" of a block, whose scales differ from each other, forming the map situation mentioned above. If a map has one and only one pixel that represents the spot where it lies, then, when computing differences between two differently scaled maps, that spot is zero, for the pixel's difference to itself is zero. Even if it is not that simple in reality, because video images not only move but also change, the theory is suitable and efficient when numerous maps are combined together.

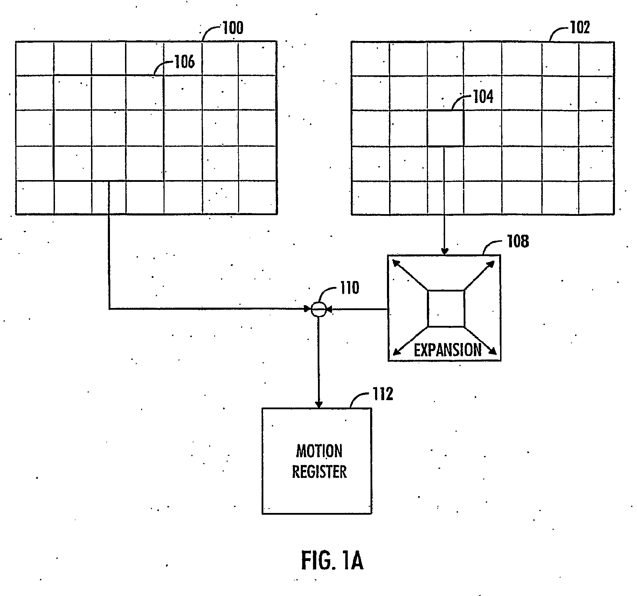

Figure 1A describes an overall simplified scene of the global motion vector definition process: when defining a global motion vector between two consecutive digital images or frames, a previous frame 100 and a present frame 102 on the video sequence, the present image 102 is divided into blocks 104, and for each block 104 a search area 106 wider than the block 104 is defined in the previous image 100. The block 104 is then expanded into the size of the search area 106 forming an "inverse" map 108 of the block 104. "inverse" here refers to the fact that normally a map is smaller than the area it represents, while in the present case, the map 108 is actually larger than the block 104. After expansion, the algorithm calculates absolute difference values 110 of the related pixels of these two pixel matrices 106 and 108 and arranges them into the motion register 112. After processing every block in image 104, a topographic map of the motion between frames 100 and 102 is formed into the register 112, where the minimum value shows the desired global motion vector between the frames. For equal sized images, like 100 and 102, this brings a minor problem: how to deal with the edge blocks of frame 102 when the search area 106 exceeds the edge of frame 100? Fortunately, there are several practical solutions: to copy the edge pixels of frame 100 to fill the search area or to ignore the edge blocks of frame 102 when the frame 102 is large enough, etc.

It is noteworthy that the present image 102 and the previous image 100 may be in the opposite order: the backward "motion estimation" is then just turned into the forward "motion estimation". On the other hand, the reference image, i.e. previous image, may also be any other frame for which the global motion vector is to be defined.

Furthermore, it should be noted that the expansion may be virtual, so that the difference calculation process runs the pixels of the block and search area in different phases. Also, different interpolation methods in block expansion should be taken into account, at least when the search area is not a multiple of the block.

The function between the $k \times l$ sized search area $S$ and the expanded block $B$ may be expressed as an error block $E$:

$$E(i,j) = \left| B(i,j) - S(i,j) \right|, \qquad\qquad (1)$$

where $i$ runs from 0 to $k$-1 and $j$ runs from 0 to $l$-1. Moreover, the topographic motion map $T$ that fills the motion register may be expressed as

$$T(i,j) = \sum_{i=1}^{n} E_i(i,j), \qquad\qquad (2)$$

where the frame is divided into n blocks. These blocks can overlap and their union need not cover the entire frame, so feature detection can be applied. Other functions may also be used, quadratic functions, for example, which are also efficient in motion estimation algorithms.

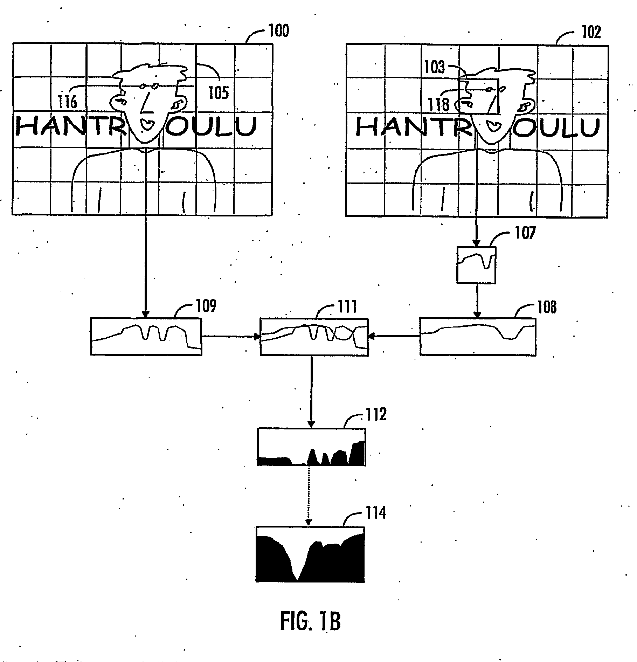

Based on the configuration of Figure 1A, Figure 1B illustrates how the previously explained theory works in practice. Again, 102 illustrates a present frame with a person in it and 100 illustrates a previous frame where the person is in a slightly different position. For the sake of clarity, only a cross section 118 of luminance data 107 at the person's eye level is shown, when a block 103 is processed. The corresponding eye-level cross section 116 is selected inside the search area 105, and the cross section 116 of luminance data 109 is shown. The expansion of 107 is shown as 108. These two luminance data elements 108, 109 are combined as 111, where the absolute difference is calculated and added into a motion register 112. The motion register gathers the difference information of every block and search area and the topographic map of motion grows block-by-block. Finally, after every block is processed, the motion register 114 shows where the global motion vector is. The map of a block does not necessarily show exactly where the global motion vector is, because the map 112 may contain several minimum values, i.e. possible candidates for a motion vector. In the places where the volume of the map grows larger, the possibility for the existence of a motion vector decreases. -

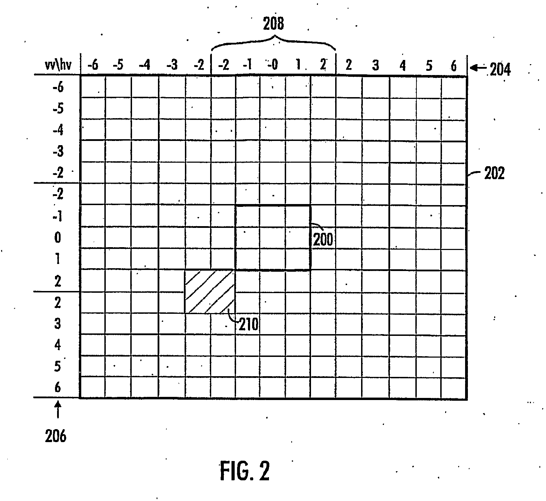

Figure 2 shows the connection between the topographic map in the motion register and motion vectors as a chart. The block size 200 is 3x3 pixels and the search area 202 is 15x15 pixels. What is noteworthy here, is the periodic character of the motion vectors, which is shown in edges of the chart: top values 204 stand for horizontal motion vectors and left values 206 stand for vertical motion vectors. The length of the motion vector period 208 is the rate between the sizes of the block and the search area. Here, the period is 5 = 15/3. Which means that there will be repeating values in the topographic map. For example, there is an area of four values 210 that all point to the same vector (2, -2). This can be eliminated by combining all four values into their mean value while filling the map or afterwards, for example. The location of the map's minimum value shows the motion vector, which can easily be read from the chart's edge values, or calculated in an application.

The minimum value can be filtered from the map by a simple matrix filter, for example

$$F = \begin{bmatrix} 1 & 2 & 1 \\ 2 & 4 & 2 \\ 1 & 2 & 1 \end{bmatrix}/16, \tag{3}$$

which proved to be efficient in the simulations of the method. The minimum value may also be found without filtering or with a different filter. However, filtering is assumed to be a more secure way to finding the minimum value.

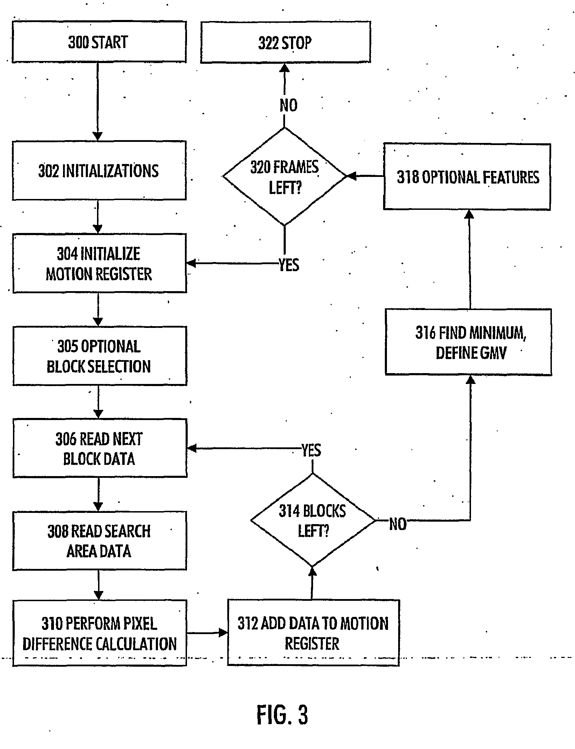

In the following, with reference to the flow chart shown in Figure 3, a method for finding the global motion vector between two images is described. The method starts from 300. In 302, initializations are made; they may contain definitions for block size, search area size, etc. Next, in 304 the register for motion map is initialized to neutral. An optional block selection may be made in 305, with feature or detail detection, for example. In 306, the block data is read. The block data may be in luminance, chrominances Cb or Cr, red, blue, or in whatever digital color format. In 308, the search area data is read from the other image around the position of the block. The block is then (virtually) enlarged to the size of the search area and their difference is calculated pixel by pixel in 310, and the difference is then saved into the motion register 312. The loop 306, 308, 310, and 312 repeats until there are no more blocks left 314. In 316, the minimum value is searched from the motion register and a general motion vector is then defined with it. When the general motion vector is known, an optional feature 318 follows, which may be for example stabilization or predictive motion estimation in a video encoder. The method loops frame pairs until there are no more frames left 320, whereupon the method is stopped in 322.

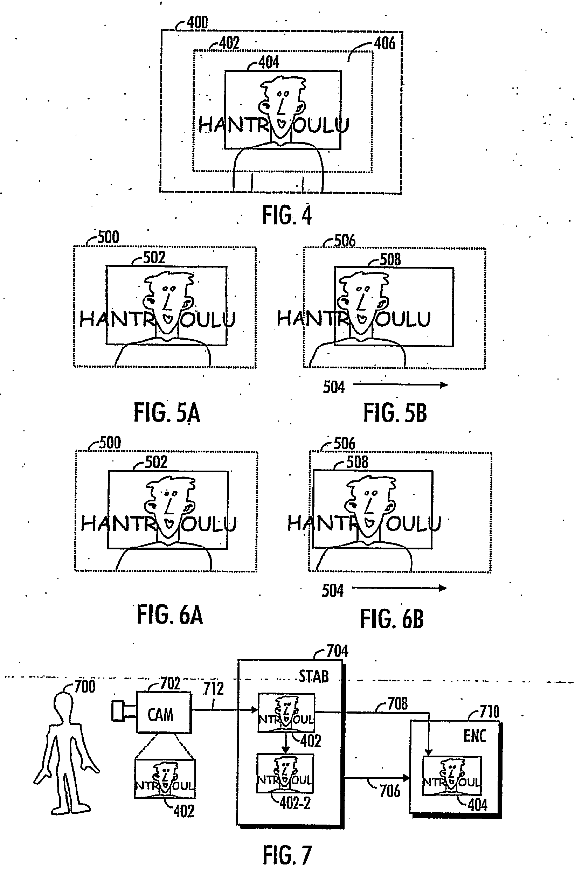

Figures 4, 5A, 5B, 6A, and 6B illustrate the use of a global motion vector for stabilization purposes. In Figure 4, a person is standing in front of the text "HANTRO OULU". For the sake of clarity, only a region defined by a frame 400 is shown. A frame 402 defines a filming scene of the camera. An image scene 404 is found inside the filming scene 402 and it is conveyed into an application, a video codec, for instance. The area 406 is a difference of the sizes between frames 402 and 404 and it is the area where frame 404 can move freely, i.e. where the stabilization is most efficient. Basically, the larger the area 406, the better the stabilization result.

Figures 5A and 5B illustrate the effect of the camera motion on the filming scene 402 and the image scene 404. Figure 5A illustrates the situation at the beginning, i.e. the first image, in which the image scene 502 is inside and in the middle of the filming scene 500. Figure 5B illustrates the following image, in which the camera has moved to the right in the direction of arrow 504, and the person to be filmed has disturbingly shifted to the left side of the image scene and of the filming scene 506. Figures 5A and 5B thus illustrate how the image is impaired due to the unintended camera motion, if no motion compensation is available.

Figures 6A and 6B illustrate the compensation of camera motion by employing the described method for motion definition. The contents of Figure 6A correspond to the contents of Figure 5A. As described, the direction and magnitude of the camera motion between the filming scene, i.e. previous image 500 in Figure 5A, and image scene, i.e. present image 506 in Figure 5B, is calculated and a global motion vector is obtained. For the sake of simplicity, our example only includes the horizontal camera motion 504, which is actually the same as the global motion vector, but opposite. The camera motion is compensated by moving the image scene 508 inside the filming scene 506 with an (opposite) global motion vector. When comparing Figures 5B and 6B, it is noticed that by using the compensation, the person to be filmed and the text behind him have not shifted to the side. As the video sequence goes on, the stabilization has to keep trace on the location of the image scene, for it could be stabilized on the next pair of images. It should be noted that besides canceling the motion by moving the next image frame to a direction opposite to the global motion vector, the defined motion may also be utilized in other prior art techniques for video stabilization, such as filtering the motion with Kalman filtering or FIR-filtering (FIR = Finite Impulse Response), for example, and canceling the motion after that.

In accordance with Figure 4, Figure 7 shows the actual phases of the scenes 400, 402, and 404 in a camera/stabilization/video encoder system. A person 700 stands in front of the camera 702 and this illustrates the scene 400. But the camera shoots only a limited area 402 of that view, which is taken into the stabilization phase 704. The stabilization is then performed between the present filming scene 402 and the previous frame's filming scene 402-2. After stabilization, the image scene 404 is taken to the video encoder 710 and the present image's filming scene 402 replaces the previous image's filming scene 402-2.

Figure 7 also illustrates the overall scene of the predictive motion estimation arrangement, where the global motion vector 706 is delivered to an encoder 710. Then, the filming scene 404 in the video encoder may be replaced by an unstabilized image scene 402.

The digital image processing apparatus comprises an input interface 712 to obtain a first digital image and a second digital image, and a processing unit 704 (and possibly also 710) coupled with the input interface 712. The processing unit 704 (and possibly also 710) defines at least one block in the first digital image, defines for each block a search area in the second digital image, the search area being larger than the block, maps the block and its search area to an equal size, calculates pixelwise errors between each block and its search area that are mapped to an equal size, collects the errors into a motion register, and defines a motion between the first digital image and the second digital image by utilizing the motion register. The digital image processing apparatus may be implemented as one or more integrated circuits, such as application-specific integrated circuits ASIC. Other embodiments are also feasible, such as a circuit built of separate logic components, or a processor with its software. A hybrid of these different embodiments is also feasible. When selecting the method of implementation, a person skilled in the art will consider the requirements set on the size and power consumption of the device, necessary processing capacity, production costs, and production volumes, for example. One embodiment is a computer program product for digital image processing, embodied on a distribution medium. In that case, the described functionality/structures may be implemented as software modules. The distribution medium may be any means for distributing software to customers, such as a (computer readable) program storage medium, a (computer readable) memory, a (computer readable) software distribution package, a (computer readable) signal, or a (computer readable) telecommunications signal.

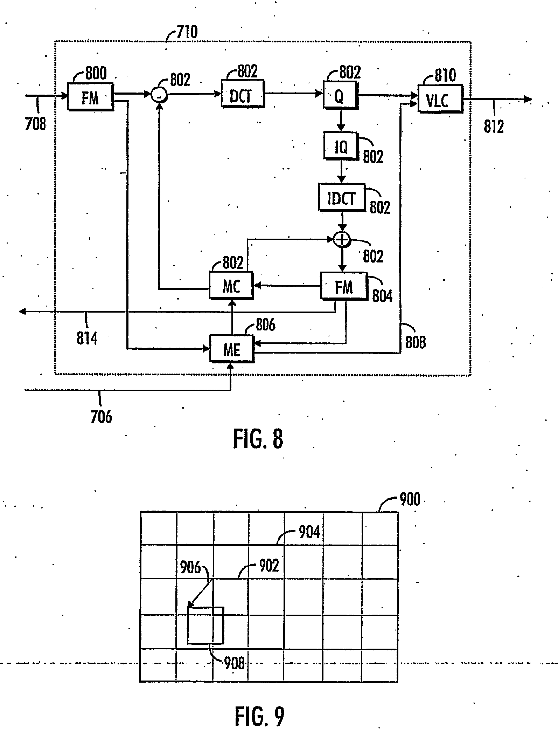

Figure 8 illustrates the (mpeg-4 type) encoder 710 more closely. First input image 708 arrives from a stabilization phase into the frame buffer 800, from where it continues block by block into encoding phases 802, whose details need not be specified here, because the stabilization is independent of the encoding implementation. The encoded image is rearranged into a second frame buffer 804. When second input image 708 arrives at the frame buffer 800, the motion estimation block 806 begins to estimate the motion, synchronized block-by-block to the encoding phase 802, between the first and second images 804, 800. The block to be encoded is taken from image 800 and the reference block, i.e. search area, is taken from image 804. Typically, full search methods are used in motion estimation, which means that a block is fitted into a search area with every possible motion vector starting from the upper left corner, for instance. Afterwards, a best match is selected for a reference block. The motion estimation block gets a global motion vector 706 from the stabilization. The motion estimation starts by using the global motion vector, and ends if a good reference block is found instantly. The selected motion vector 808 is conveyed to a variable-length coder 810, whose output 812 provides compressed data.

By comparing Figures 7 and 8, it can be seen that there is a duplicate frame buffer: one for image 402 at the stabilization and one buffer 800 at the decoder. They can be combined so that the encoder 710 uses the buffer for image 402 as buffer 800. This can be done, for example, so that encoder 710 reads the stabilized image 404 after the stabilization phase. Another duplicate is found from image 402-2 at the stabilization of Figure 7 and frame buffer 804 at the decoder of Figure 8. They can be combined the same way: the stabilization phase uses 814 the stabilized image 404 from buffer 804 as a reference frame 402-2. In this way the stabilization does not increase the need for memory in a video encoding system at all (except for the motion map).

Figure 9 illustrates the usage of a global motion vector in the motion estimation of an encoder. Frame 900 represents a reference frame, from which the reference block will be taken to encode a block. Block 902 represents the location of a block (to be encoded) in a reference frame 900, i.e. a zero location. Around the zero location is a limited search area 904, which is typically a multiple of the size of block 902. The arrow 906 is the global motion vector calculated for a frame to be encoded and reference frame 900. So the most probable reference block for a block to be coded is found at the location 908, to which the global motion vector 906 points. In the case of failure, i.e. the reference block seems not to be the best one, the procedure may continue by checking the second lowest value from the map, the third lowest value, and so on. Local minimums usually also point to a local motion vector, so they can be checked too.

Note that the solution is not related to a block size, which may vary from video coding standard to another. For example, a mpeg-4 standard offers for a luminance frame a 16x16 pixel macroblock, which comprises four 8x8 pixel blocks.

Even though the invention is described above with reference to an example according to the accompanying drawings, it is clear that the invention is not restricted thereto but it can be modified in several ways within the scope of the appended claims.

**Claims**

1. A digital image processing apparatus, comprising:

   an input interface to obtain a first digital image and a second digital image; and
   a processing unit coupled with the input interface to define at least one block in the first digital image, to define for each block a search area in the second digital image, the search area being larger than the block, to map the block and its search area to an equal size, to calculate pixelwise errors between each block and its search area that are mapped to an equal size, to collect the errors into a motion register, and to define a motion between the first digital image and the second digital image by utilizing the motion register.

2. The digital image processing apparatus of claim 1, wherein the errors are calculated with an error function

$$E(i, j) = \left| B(i, j) - S(i, j) \right|,$$

   where B is the block, S is search area, i and j represent indexes of the block and the search area, and the errors are collected into the motion register by a function $T(i, j) = \sum_{i=1}^{n} E_i(i, j)$,

   where the first digital image is divided into n blocks.

3. The digital image processing apparatus of claim 1, wherein the processing unit selects the blocks such that the blocks overlap and/or do not cover the first digital image entirely.

4. The digital image processing apparatus of claim 1, wherein the processing unit selects the blocks with feature detection.

5. The digital image processing apparatus of claim 1, which further operates for video sequence stabilization, whereby the processing unit defines the motion as a global motion vector obtained with a global minimum in the motion register and cancels the motion between the first digital image and the second digital image.

6. The digital image processing apparatus of claim 1, which further operates for video encoding, whereby the processing unit predicts the motion from a global motion vector obtained with a global minimum in the motion register or from a motion map formed on the basis of the motion register, or from at least one local motion vector obtained with a local minimum in the motion register.

7. An arrangement for digital image processing, comprising:

   means for obtaining a first digital image and a second digital image;
   means for defining at least one block in the first digital image;
   means for defining for each block a search area in the second digital image, the search area being larger than the block;
   means for mapping the block and its search area to an equal size;
   means for calculating pixelwise errors between each block and its search area that are mapped to an equal size;
   means for collecting the errors into a motion register; and
   means for defining a motion between the first digital image and the second digital image by utilizing the motion register.

8. A computer program product for digital image processing, embodied on a distribution medium and comprising:

   an input module to obtain a first digital image and a second digital image; and

EP 1 904 974 B1

a computing module coupled with the input module to define at least one block in the first digital image, to define for each block a search area in the second digital image, the search area being larger than the block, to map the block and its search area to an equal size, to calculate pixelwise errors between each block and its search area that are mapped to an equal size, to collect the errors into a motion register, and to define a motion between the first digital image and the second digital image by utilizing the motion register.

9. An integrated digital image processing circuit, comprising:

an input block to obtain a first digital image and a second digital image; and
a processing block coupled with the input block to define at least one block in the first digital image, to define for each block a search area in the second digital image, the search area being larger than the block, to map the block and its search area to an equal size, to calculate pixelwise errors between each block and its search area that are mapped to an equal size, to collect the errors into a motion register, and to define a motion between the first digital image and the second digital image by utilizing the motion register.

10. A method for defining motion between digital images, comprising:

obtaining a first digital image and a second digital image;
defining at least one block in the first digital image;
defining for each block a search area in the second digital image, the search area being larger than the block;
mapping the block and its search area to an equal size;
calculating pixelwise errors between each block and its search area that are mapped to an equal size;
collecting the errors into a motion register; and
defining a motion between the first digital image and the second digital image by utilizing the motion register.

**Patentansprüche**

1. Eine Vorrichtung zur digitalen Bildverarbeitung, die Folgendes aufweist:

ein Inputinterface, um ein erstes digitales Bild und ein zweites digitales Bild zu erhalten; und
eine mit dem Inputinterface gekoppelte Verarbeitungseinheit, um mindestens einen Block in dem ersten digitalen Bild zu definieren, um für jeden Block einen Suchbereich in dem zweiten digitalen Bild zu definieren, wobei der Suchbereich größer als der Block ist, um den Block und seinen Suchbereich durch Mapping auf eine gleiche Größe zu bringen, um Pixel für Pixel Fehler zwischen jedem Block und seinem Suchbereich, die durch Mapping auf eine gleiche Größe gebracht worden sind, zu kalkulieren, um die Fehler in ein Bewegungsregister zu sammeln und um eine Bewegung zwischen dem ersten digitalen Bild und dem zweiten digitalen Bild zu definieren, indem das Bewegungsregister verwendet wird.

2. Die Vorrichtung zur digitalen Bildverarbeitung gemäß dem Patentanspruch 1, wobei die Fehler mit einer Fehler-funktion

$$E(i, j) = \left| B(i, j) - S(i, j) \right|$$

kalkuliert werden, wobei B der Block ist, S der Suchbereich ist, i und j die Indizes des Blocks und des Suchbereichs repräsentieren, und die Fehler in das Bewegungsregister durch eine Funktion $T(i, j) = \sum_{i=1}^{n} E_i(i, j)$ gesammelt werden, wobei das erste digitale Bild in n Blöcke geteilt wird.

3. Die Vorrichtung zur digitalen Bildverarbeitung gemäß dem Patentanspruch 1, wobei die Verarbeitungseinheit die Blöcke derart wählt, dass die Blöcke sich überlappen und/oder das erste digitale Bild nicht vollständig zudecken.

4. Die Vorrichtung zur digitalen Bildverarbeitung gemäß dem Patentanspruch 1, wobei die Verarbeitungseinheit die Blöcke mit Kennzeichenerkennung wählt.

8

5. Die Vorrichtung zur digitalen Bildverarbeitung gemäß dem Patentanspruch 1, welche weiter zur Videosequenzstabilisierung funktioniert, wodurch die Verarbeitungseinheit die Bewegung als einen, mit einem globalen Minimum in dem Bewegungsregister erhaltenen globalen Bewegungsvektor definiert und die Bewegung zwischen dem ersten digitalen Bild und dem zweiten digitalen Bild rückgängig macht.

6. Die Vorrichtung zur digitalen Bildverarbeitung gemäß dem Patentanspruch 1, welche weiter zur Videokodierung funktioniert, wodurch die Verarbeitungseinheit die Bewegung aus einem, mit einem globalen Minimum in dem Bewegungsregister erhaltenen globalen Bewegungsvektor oder aus einer auf der Basis des Bewegungsregisters gebildeten Karte oder aus mindestens einem, mit einem lokalen Minimum in dem Bewegungsregister erhaltenen lokalen Bewegungsvektor voraussagt.

7. Eine Anordnung zur digitalen Bildverarbeitung, die Folgendes aufweist:

Mittel zum Erhalten eines ersten digitalen Bildes und eines zweiten digitalen Bildes;
Mittel, um mindestens einen Block in dem ersten digitalen Bild zu definieren;
Mittel, um für jeden Block einen Suchbereich in dem zweiten digitalen Bild zu definieren, wobei der Suchbereich größer als der Block ist;
Mittel, um den Block und seinen Suchbereich durch Mapping auf eine gleiche Größe zu bringen;
Mittel, um Pixel für Pixel Fehler zwischen jedem Block und seinem Suchbereich, die durch Mapping auf eine gleiche Größe gebracht worden sind, zu kalkulieren;
Mittel, um die Fehler in ein Bewegungsregister zu sammeln; und
Mittel, um eine Bewegung zwischen dem ersten digitalen Bild und dem zweiten digitalen Bild zu definieren, indem das Bewegungsregister verwendet wird.

8. Ein Computerprogrammprodukt zur digitalen Bildverarbeitung, das in einem Distributionsmedium enthalten ist und Folgendes aufweist:

ein Inputmodul, um ein erstes digitales Bild und ein zweites digitales Bild zu erhalten; und
ein mit dem Inputmodul gekoppeltes Berechnungsmodul, um mindestens einen Block in dem ersten digitalen Bild zu definieren, um für jeden Block einen Suchbereich in dem zweiten digitalen Bild zu definieren, wobei der Suchbereich größer als der Block ist, um den Block und seinen Suchbereich durch Mapping auf eine gleiche Größe zu bringen, um Pixel für Pixel Fehler zwischen jedem Block und seinem Suchbereich, die durch Mapping auf eine gleiche Größe gebracht worden sind, zu kalkulieren, um die Fehler in ein Bewegungsregister zu sammeln und eine Bewegung zwischen dem ersten digitalen Bild und dem zweiten digitalen Bild zu definieren, indem das Bewegungsregister verwendet wird.

9. Eine integrierter Schaltkreis zur digitalen Bildverarbeitung, die Folgendes aufweist:

einen Inputblock, um ein erstes digitales Bild und ein zweites digitales Bild zu erhalten; und
einen mit dem Inputblock gekoppelten Verarbeitungsblock, um mindestens einen Block in dem ersten digitalen Bild zu definieren, um für jeden Block einen Suchbereich in dem zweiten digitalen Bild zu definieren, wobei der Suchbereich größer als der Block ist, um den Block und seinen Suchbereich durch Mapping auf eine gleiche Größe zu bringen, um Pixel für Pixel Fehler zwischen jedem Block und seinem Suchbereich, die durch Mapping auf eine gleiche Größe gebracht worden sind, zu kalkulieren, um Fehler in ein Bewegungsregister zu sammeln und eine Bewegung zwischen dem ersten digitalen Bild und dem zweiten digitalen Bild zu definieren, indem das Bewegungsregister verwendet wird.

10. Ein Verfahren zum Definieren von Bewegung zwischen digitalen Bildern, welches Folgendes aufweist.
ein erstes digitales Bild und ein zweites digitales Bild erhalten;
mindestens einen ersten Block in dem ersten digitalen Bild definieren;
für jeden Block einen Suchbereich in dem zweiten digitalen Bild definieren, wobei der Suchbereich größer als der Block ist;
den Block und seinen Suchbereich durch Mapping auf eine gleiche Größe bringen;
Pixel für Pixel Fehler zwischen jedem Block und seinem Suchbereich, die durch Mapping auf eine gleiche Größe gebracht worden sind, kalkulieren,
Fehler in ein Bewegungsregister sammeln; und
eine Bewegung zwischen dem ersten digitalen Bild und dem zweiten digitalen Bild definieren, indem das Bewegungsregister verwendet wird.

**Revendications**

1. Un appareil de traitement d'image numérique, comprenant :

    une interface d'entrée permettant d'obtenir une première image numérique et une seconde image numérique, et une unité de traitement reliée à l'interface d'entrée, destinée à définir au moins un bloc dans la première image numérique, à définir pour chaque bloc une zone de recherche dans la seconde image numérique, la zone de recherche étant plus grande que le bloc, à mapper le bloc et sa zone de recherche selon une dimension égale, à calculer les erreurs pixel par pixel entre chaque bloc et sa zone de recherche qui sont mappés selon une dimension égale, à collecter les erreurs dans un registre de mouvement, et à définir un mouvement entre la première image numérique et la seconde image numérique en utilisant le registre de mouvement.

2. L'appareil de traitement d'image numérique selon la revendication 1, dans lequel les erreurs sont calculées avec une fonction d'erreur

$$E(i, j) = \left| B(i, j) - S(i, j) \right|,$$

dans laquelle B est le bloc, S est la zone de recherche, *i* et *j* représentent des indices du bloc et de la zone de recherche, et les erreurs sont recueillies dans le registre de mouvement par une fonction $T(i, j) = \sum_{i=1}^{n} E_i(i, j)$ ,

dans laquelle la première image numérique est divisée en n blocs.

3. L'appareil de traitement d'image numérique selon la revendication 1, dans lequel l'unité de traitement sélectionne les blocs de telle sorte que les blocs se chevauchent et / ou ne couvrent pas la première image numérique entièrement.

4. L'appareil de traitement d'image numérique selon la revendication 1, dans lequel l'unité de traitement sélectionne les blocs avec une détection de caractéristique.

5. L'appareil de traitement d'image numérique selon la revendication 1, qui fonctionne en outre pour la stabilisation d'une séquence vidéo, dans lequel l'unité de traitement définit le mouvement en tant que vecteur de mouvement global obtenu avec un minimum global dans le registre de mouvement et annule le mouvement entre la première image numérique et la deuxième image numérique.

6. L'appareil de traitement d'image numérique selon la revendication 1, qui fonctionne en outre pour un codage vidéo, dans lequel l'unité de traitement prédit le mouvement à partir d'un vecteur de mouvement global obtenu avec un minimum global dans le registre de mouvement ou à partir d'une carte de mouvement formée sur la base du registre de mouvement, ou à partir d'au moins un vecteur de mouvement local obtenu avec un minimum local dans le registre de mouvement.

7. Un dispositif de traitement d'image numérique, comprenant :

    des moyens pour obtenir une première image numérique et une deuxième image numérique ;
    des moyens pour définir au moins un bloc dans la première image numérique ;
    des moyens pour définir pour chaque bloc une zone de recherche dans la deuxième image numérique, la zone de recherche étant plus grande que le bloc ;
    des moyens pour mapper le bloc et sa zone de recherche selon une dimension égale ;
    des moyens pour calculer des erreurs pixel par pixel entre chaque bloc et sa zone de recherche qui sont mappés selon une dimension égale ;
    des moyens pour collecter les erreurs dans un registre de mouvement, et
    des moyens pour définir un mouvement entre la première image numérique et la deuxième image numérique, en utilisant le registre de mouvement.

8. Un produit de programme informatique pour le traitement d'une image numérique, embarqué sur un support de distribution et comprenant :

un module d'entrée permettant d'obtenir une première image numérique et une deuxième image numérique, et un module de calcul relié au module d'entrée, destiné à définir au moins un bloc dans la première image numérique, à définir pour chaque bloc une zone de recherche dans la deuxième image numérique, la zone de recherche étant plus grande que le bloc, à mapper le bloc et sa zone de recherche selon une dimension égale, à calculer des erreurs pixel par pixel entre chaque bloc et sa zone de recherche qui sont mappés selon une dimension égale, à collecter les erreurs dans un registre de mouvement, et à définir un mouvement entre la première image numérique et la deuxième image numérique en utilisant le registre de mouvement.

**9.** Un circuit intégré de traitement d'une image numérique, comprenant :

un bloc d'entrée permettant d'obtenir une première image numérique et une deuxième image numérique, et un bloc de traitement relié au bloc d'entrée, destiné à définir au moins un bloc dans la première image numérique, à définir pour chaque bloc une zone de recherche dans la deuxième image numérique, la zone de recherche étant plus grande que le bloc, à mapper le bloc et sa zone de recherche selon une dimension égale, à calculer les erreurs pixel par pixel entre chaque bloc et la zone de recherche qui sont mappés selon une dimension égale, à collecter les erreurs dans un registre de mouvement, et à définir un mouvement entre la première image numérique et la deuxième image numérique en utilisant le registre de mouvement.

**10.** Un procédé pour définir un mouvement entre des images numériques, comprenant :

l'obtention d'une première image numérique et d'une deuxième image numérique ;
la définition d'au moins un bloc dans la première image numérique ;
la définition pour chaque bloc d'une zone de recherche dans la deuxième image numérique, la zone de recherche étant plus grande que le bloc ;
le mappage du bloc et de sa zone de recherche selon une dimension égale ;
le calcul d'erreurs pixel par pixel entre chaque bloc et sa zone de recherche qui sont mappés selon une dimension égale ;
la collecte des erreurs dans un registre de mouvement ;
la définition d'un mouvement entre la première image numérique et la deuxième image numérique en utilisant le registre de mouvement.

FIG. 1A

FIG. 1B

FIG. 2

FIG. 3

FIG. 4

FIG. 5A

FIG. 5B

FIG. 6A

FIG. 6B

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5317685 A
- US 5926212 A

**Non-patent literature cited in the description**

- **GUNNAR THALIN.** *Deshaker - a video stabilizer for VirtualDub,* 24 November 2003